# EUROPEAN PATENT APPLICATION

(11) **EP 4 468 380 A1**
(43) Date of publication of application: **27.11.2024**
(21) Application number: 22960377.4
(22) Date of filing: 30.09.2022
(51) Int. Cl.: H01M 4/02

(54) **NEGATIVE ELECTRODE SHEET AND PREPARATION METHOD THEREFOR, AND SECONDARY BATTERY AND ELECTRIC DEVICE**

(71) Applicant: Contemporary Amperex Technology (Hong Kong) Limited, Central, Central And Western District (HK)
(72) Inventor: TANG, Daichun, Ningde, Fujian 352100 (CN); TIAN, Yaxi, Ningde, Fujian 352100 (CN); WANG, Xitong, Ningde, Fujian 352100 (CN); JI, Tingzhen, Ningde, Fujian 352100 (CN); XIA, Yurun, Ningde, Fujian 352100 (CN); CHEN, Xiangyan, Ningde, Fujian 352100 (CN)
(74) Representative: Laufhütte, Dieter
(86) International application number: PCT/CN2022/123492
(87) International publication number: WO 2024/065764

(57) **Abstract**

The present application provides a negative electrode plate and the method for preparing the same, a secondary battery, and an electrical device. The negative electrode plate includes a negative electrode current collector, and a negative electrode film layer arranged on at least one surface of the negative electrode current collector, wherein the negative electrode film layer comprises infiltrating cavity which opens in a direction away from the negative electrode current collector and extend in a first direction; and wherein the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1. The negative electrode plate of the present application, when being applied to a secondary battery, can improve the safety performance and fast charging capacity of the secondary battery.

## Description

### Technical field

The present application relates to the field of batteries, specifically to a negative electrode plate and the method for preparing the same, a secondary battery, and an electrical device.

### Background technology

Secondary batteries have high capacity and long lifespan, and thus are widely used in electronic devices, such as mobile phones, laptops, battery cars, electric cars, electric planes, electric ships, electric toy cars, electric toy ships, electric toy planes, and electric tools.

As the range of battery applications becomes more and more extensive, the requirements for the performance of secondary batteries are becoming increasingly stringent. In order to improve the performance of secondary batteries, optimization and improvement are usually made on the electrode plates in the secondary battery, such as the negative electrode plate. Nevertheless, the existing negative electrode plates, when being used in secondary batteries, result in poor fast charging capability and safety performance, which are needed be further improved.

### Summary

The present application is made in view of the above problems. The present application is intended to provide a negative electrode plate and a method for preparing the same, a secondary battery, and an electrical device. The negative electrode plate of the present application, when being applied to a secondary battery, can improve the safety performance and fast charging capacity of the secondary battery.

A first aspect of the present application provides a negative electrode plate, comprising a negative electrode current collector, and a negative electrode film layer arranged on at least one surface of the negative electrode current collector, wherein the negative electrode film layer comprises a infiltrating cavity which opens in a direction away from the negative electrode current collector and extend in a first direction; and wherein the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

In the present application, owing to the presence of the infiltrating cavity, the diffusion path of active ions such as lithium ions in the negative electrode plate becomes shorter, which can significantly improve the concentration polarization on both sides of the negative electrode film layer, and improve the safety performance and fast charging capability of the secondary battery.

In some embodiments of the present application, the first direction and the length direction of the negative electrode plate form an angle denoted as β in degree (°), wherein 0° ≤ β < 180°, and optionally, 0° ≤ β ≤30° or 150° ≤β < 180°.

In some embodiments of the present application, the first direction is parallel with the length direction of the negative electrode plate.

In some embodiments of the present application, the first direction is parallel with the width direction of the negative electrode plate.

Accordingly, the negative electrode plate, the positive electrode plate and the separator of the present application can be wound along the length direction of the negative electrode plate when forming the electrode assembly. When the electrode assembly is placed into a housing to form a secondary battery, the height direction of the secondary battery can be parallel with the length direction of the negative electrode plate, or can be parallel with the width direction of the negative electrode plate, or can form an angle with the direction of the negative electrode plate. The electrolytic solution in the infiltrating cavity can be guided from the bottom to the top of the secondary battery. In the height direction of the secondary battery, the electrolytic solution infiltrates the electrode assembly more uniformly, and in the height direction, the migration rate of active ions is not much different, so as to ensure the uniform performance of the electrode assembly in the charging and discharging process, and further improve the fast charging capability and safety performance of the secondary battery.

In some embodiments of the present application, the negative electrode film layer has a dimension in the thickness direction of the negative electrode plate denoted as d in µm, the infiltrating cavity have a dimension in the thickness direction of the negative electrode plate denoted as di in µm, the negative electrode plate satisfies 0.01 ≤ d₁/d < 1, and optionally, 0.2 ≤ d₁/d ≤ 0.8.

Accordingly, under the condition that the dimension in the thickness direction of the infiltrating cavity of the negative electrode plate in the present application satisfies the above condition, the influence to dimension fluctuation caused by process deviation can be reduced, and the electrolytic solution can be fully infiltrated inside the negative electrode film layer, so that the migration of active ions within the negative electrode film layer is more rapid, and the risk of concentration polarization can be further reduced, the fast charging capability and safety performance of secondary batteries can be improved.

In some embodiments of the present application, the cross-section parallel with the second direction of the infiltrating cavity includes a first edge and a second edge, wherein the first and the second edges are opposite each other along the thickness direction of the negative electrode plate, the first edge is arranged away from the negative electrode current collector and the second edge is arranged close to the negative electrode current collector, and the second direction, the first direction and the thickness direction are perpendicular one another; the first edge has a dimension denoted as *x*₁ in µm, wherein 20 ≤ *x*₁ ≤ 5000, and optionally 20 ≤ *x*₁ ≤ 80; and/or the second edge has a dimension denoted as *x*₂ in µm, wherein 20 ≤ *x*₂ ≤ 5000, and optionally 20 ≤ *x*₂ ≤ 80. Under the condition that the infiltrating cavity satisfies the above conditions, the fast charging capacity and safety performance of the secondary battery both can be improved.

In some embodiments of the present application, 0 ≤ |*x*₁ - *x*₂ | ≤ 60. Under the condition that the infiltrating cavity satisfies the above conditions, the fast charging capacity, safety performance and energy density of the secondary battery can be further improved.

In some embodiments of the present application, the cross-section parallel with the thickness direction of the infiltrating cavity has a shape of a regular polygon or an irregular polygon; optionally, the cross-section parallel with the thickness direction of the infiltrating cavity has a shape of rectangular, square, trapezoidal, or a polygon containing an arc. The structure of the infiltrating cavity can be flexibly set according to the production requirements, and the intercalation speed of the active ions into the negative active substance can be adjusted by setting the dimensions of the first edge and the second edge of the infiltrating cavity. As a result, the fast charging capacity of the secondary battery is improved.

In some embodiments of the present application, the cross-section includes two side edges opposite each other along the second direction, wherein the two side edges are connected via the second edge; and one of the two side edges and the second edge form an angle denoted as θ in degree (°), wherein 0° < θ < 150°.

Accordingly, the structure of the infiltrating cavity according to the embodiments of the present application can be flexibly set according to the production requirements. By adjusting the angle between the side of the infiltrating cavity and the second edge thereof, the intercalation speed of the active ions into the negative active substance can be adjusted so as to improve the fast charging capacity of the secondary battery.

In some embodiments of the present application, the negative electrode film layer has a porosity denoted as P %, wherein 10 ≤ P ≤ 40. Under the condition that the porosity of the negative electrode film layer P% falls within the above range, the fast charging capacity and energy density of the secondary battery can be improved.

In some embodiments of the present application, multiple infiltrating cavities are arranged in intervals. By setting multiple infiltrating cavities, the transfer speed of active ions in liquid phase in the negative electrode film layer can be further improved, so that the active ions intercalate into the negative electrode active material more quickly, and render further improved fast charging capacity of the secondary battery.

A second aspect of the present application provides a method for preparing a negative electrode plate, comprising providing a negative electrode current collector; palcing a shielding member on at least one surface of the negative electrode current collector, wherein the shielding member includes a first through-hole(s) that penetrate(s) through the shielding member; applying the negative electrode slurry on the shielding member to allow the negative electrode slurry to flow through the through-hole on the surface of the negative electrode current collector; and curing the negative electrode slurry to allow the negative electrode slurry to form a negative electrode film layer on the surface of the negative electrode current collector, wherein the negative electrode film layer has infiltrating cavity arranged in a staggered manner with the first through-hole, and the negative electrode film layer and the negative electrode current collector form the negative electrode plate, wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

A third aspect of the present application provides a method for preparing a negative electrode plate, comprising providing a negative electrode current collector; applying a negative electrode slurry on at least one surface of the negative electrode current collector; palcing a pressing member on the negative electrode slurry to apply a force to the negative electrode slurry, so that the negative electrode slurry has concave parts; and curing the negative electrode slurry to allow the negative electrode slurry to form a negative electrode film layer on the surface of the negative electrode current collector, wherein the negative electrode film layer has infiltrating cavity corresponding to the concave parts, and the negative electrode film layer and the negative electrode current collector form the negative electrode plate, wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

A fourth aspect of the present application provides a method for preparing a negative electrode plate, comprising providing a negative electrode current collector; applying a negative electrode slurry on at least one surface of the negative electrode current collector; curing the negative electrode slurry to allow the negative electrode slurry to form a negative electrode film layer on the surface of the negative electrode current collector, arranging infiltrating cavity on the negative electrode film layer, and the negative electrode film layer and the negative electrode current collector form the negative electrode plate, wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

A fifth aspect of the present application provides a secondary battery, comprising the negative electrode plate according to the first aspect of the present application or the negative electrode plate prepared from the method according to the second aspect of the present application.

In some embodiments of the present application, the first direction and the height direction of the secondary battery forms angle δ in degree (°), wherein 0° ≤ δ < 180°, and optionally, 0° ≤ δ ≤ 30° or 150° ≤ δ < 180°.

A sixth aspect of the present application provides an electrical device, comprising a secondary battery according to the fifth aspect of the present application.

### Brief Description of the Drawings

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort.
Figure 1 is a structural schematic diagram of one embodiment of the negative electrode plate of the present application.
Figure 2 is a cross-sectional diagram of the negative electrode plate as shown in Figure 1, along the I-I line.
Figure 3 is a structural schematic diagram of one embodiment of the negative electrode plate of the present application.
Figure 4 is a schematic diagram of the negative electrode plate shown in Figure 3, enlarged at position II.
Figure 5 is a schematic diagram of one embodiment of the electrode assembly of the secondary battery of the present application.
Figure 6 is a schematic diagram of one embodiment of the secondary battery of the present application.
Figure 7 is an exploded schematic diagram of the secondary battery as shown in Figure 6.
Figure 8 is a schematic diagram of the battery module of the present application.
Figure 9 is a schematic diagram of one embodiment of the battery pack of the present application.
Figure 10 is an exploded schematic diagram of the battery pack as shown in Figure 9.
Figure 11 is a schematic diagram of one embodiment of an electrical device comprising a secondary battery as a power source of the present application.

The drawings may not necessarily be drawn to the actual scale.

The references in the figures are specified as follows:
X First direction; Y. Second direction; Z. Thickness direction;
1. Battery pack; 2. Upper box; 3. Lower box; 4. Battery module;
5. Secondary battery; 51. Housing;
52. Electrode assembly; 521. Negative electrode plate; 5211. Negative electrode current collector; 5212. Negative electrode film layer; 5213. Infiltrating cavity; 5214. First edge; 5215. Second edge; 5216. Side;
522. Positive electrode plate; 523. Separator;
53. Cover plate; and
6. Electrical device.

### Detailed Description

Hereinbelow, the implementation of the negative electrode plate and the method for preparing the same, the secondary battery, and the electrical device as disclosed in the present application will be explained in detail. However, there may be situations where unnecessary detailed explanations may be omitted. For example, there are situations where detailed explanations of well-known matters are omitted and repeated explanations of the same structure are actually provided. This is to avoid the following explanations becoming unnecessarily lengthy and easy for those skilled in the art to understand. In addition, the accompanying drawings and the following explanations are provided for those skilled in the art to fully understand the present application and are not intended to limit the subject matter recorded in the claims.

The "scope" disclosed in the present application is limited in the form of a lower limit and an upper limit. The given scope is limited by selecting a lower limit and an upper limit, and the selected lower limit and upper limit the boundary of the special scope. The range limited in this way can include or exclude end values, and can be arbitrarily combined, that is, any lower limit can be combined with any upper limit to form a range. For example, if a range of 60-120 and 80-110 is listed for specific parameters, it is also expected to be understood as a range of 60-110 and 80-120. In addition, if the minimum range values 1 and 2 are listed, and if the maximum range values 3, 4, and 5 are listed, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only a shortened representation of these numerical combinations. In addition, when expressing an integer with a parameter of ≥ 2, it is equivalent to disclosing that the parameter is, for example, integers 2, 3, 4, 5, 6, 7, 8, 9, 10, 11, 12, etc.

Unless otherwise specified, all implementations and optional implementations of the present application can be combined to form new technical solutions. Unless otherwise specified, all technical features and optional technical features of the present application can be combined to form a new technical solution.

Unless otherwise specified, all steps of the present application can be carried out in sequence or randomly, preferably in sequence. For example, the method includes steps (a) and (b), indicating that the method can include steps (a) and (b) that are sequentially performed, as well as steps (b) and (a) that are sequentially performed. For example, mentioning a method can also include step (c), indicating that step (c) can be added to the method in any order. For example, the method can include steps (a), (b), and (c), as well as steps (a), (c), and (b), and can also include steps (c), (a), and (b).

Unless otherwise specified, the terms "comprise/comprising", "include/including", or "contain/containing" mentioned in the present application indicate the open-ended mode, but also can be interpret as the closed-ended mode. For example, "comprise/comprising", "include/including", or "contain/containing" may indicate that other components that are not listed may be comprised, included, or contained, or only listed components may be comprised, included, or contained.

Unless otherwise specified, in the present application, the wording 'or' is inclusive. For example, the phrase "A or B" means "A, B, or both A and B. More specifically, any of the following conditions satisfy the condition "A or B": A is true (or exists) and B is false (or does not exist); A is false (or non-existent) and B is true (or exists); Or both A and B are true (or present).

In the present application, the terms "multiple" and "multiple types" refer to two or more than two.

During the secondary battery charging process, the negative electrode plate usually undergoes the following electrochemical processes: (1) the solvated lithium ions are de-solvated; (2) the de-solvated lithium ions pass through the solid electrolyte film; (3) lithium ions undergo charge transfer reaction at the interface between the active substance and solid electrolyte film; and (4) lithium ions diffuse in the solid phase of the active substance.

During forming the negative electrode plates, cold pressing and other processes are usually required. The surface of the negative electrode film layer after cold pressing is likely to have problems of closed pores, which is not conducive to the rapid infiltration of electrolytic solution to the side of the negative electrode film layer near the negative electrode current collector. This leads to the significant difference in the concentration of active ions such as lithium ions on two sides of the negative electrode film layer, which leads the problem of lithium ion concentration polarization. Lithium ions are likely to deposit on the surface of the negative electrode film layer away from the negative electrode current collector. The deposited metal lithium will further increase the potential barrier for lithium ions to enter the negative active material, which may further worsen the concentration polarization problem. Further precipitation of lithium ions on the surface of the negative electrode film may lead to the formation of lithium dendrites which may puncture the separator and cause short circuit between the positive and negative electrodes, posing a safety risk. Moreover, due to the slow liquid phase conduction rate of active ions, the fast charging ability of secondary batteries is poor.

In view of this, the inventor, starting from improving the structure of the negative electrode plate, intends to obtain a negative electrode plate that can balance fast charging capacity and safety performance. Hereinbelow, the specific structure of the negative electrode plate will be explained.

### Negative electrode plate

In the first aspect, the present application provides a negative electrode plate.

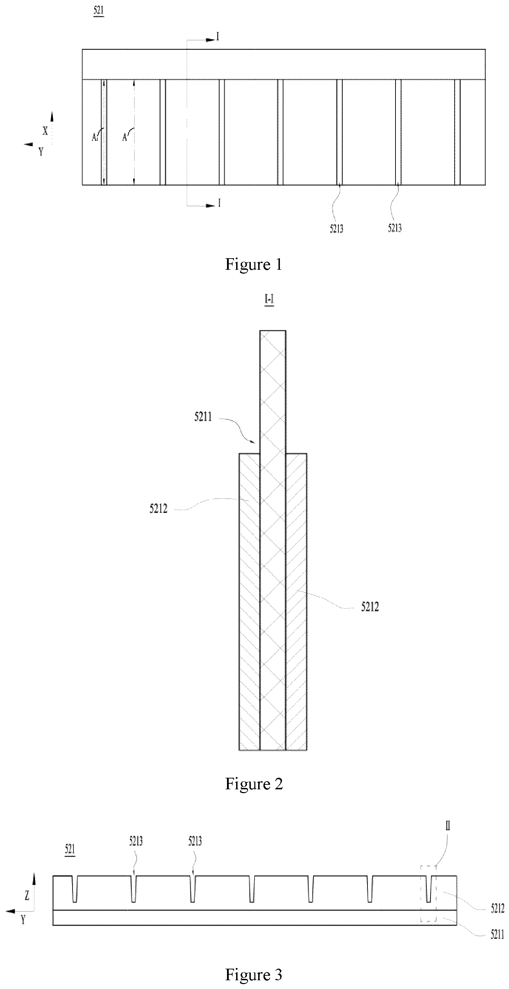

As shown in Figures 1 to 4, the negative electrode plate 521 comprises a negative electrode current collector 5211, and a negative electrode film layer 5212 placed on at least one surface of the negative electrode current collector 5211, wherein the negative electrode film layer 5212 comprises a infiltrating cavity 5213 which opens in a direction away from the negative electrode current collector 5211 and extend in a first direction; and wherein the negative electrode film layer 5212has a dimension in the first direction denoted as A in µm, the infiltrating cavity 5213 has a dimension in the first direction denoted as A₁ in µm, wherein 0.1 ≤ A₁/A ≤ 1.

As an example, the negative electrode current collector 5211 has two opposite surfaces in the thickness direction thereof, and the negative film layer 5212 is placed on either opposite surface or both opposite surfaces of the negative electrode current collector 5211.

The inventors found through extensive research that the design parameters of the infiltrating cavity 5213 have a certain impact on both the fast charging ability and safety performance of secondary batteries. Especially when 0.1 ≤ A₁/A ≤ 1, due to the presence of the infiltrating cavity, the diffusion path of active ions such as lithium ions in the negative electrode plate becomes shorter, which can significantly solve the concentration polarization problem on two sides of the negative electrode film layer, and thus improve the safety performance and fast charging ability of secondary batteries.

In the present application, the infiltrating cavities 5213 extends in the first direction, which means that the infiltrating cavities 5213 can have a linear extension trend or an overall extension trend approximately in the first direction, for example, the infiltrating cavities 5213 can include arc segments, etc. The first direction can form an angle with the length direction of the negative electrode plate β in °, wherein 0° ≤ β < 180°. Optionally, 0° ≤ β < 30° or 150° ≤ β < 180°. When β = 0°, the first direction is parallel or approximately parallel with the length direction of the negative electrode plate. When β >0°, the first direction and the direction of the negative electrode plate form an certain angle. When β = 90°, the first direction is parallel or approximately parallel with the width direction of the negative electrode plate.

Being parallel with the width or length direction of the negative electrode plate 521, or with other directions. As shown in Figure 1, X direction represents the first direction, which is parallel with the width direction of the negative electrode plate 521.

The values of A, and A can be determined using a soft ruler or a scanning electron microscope.

The liquid phase conduction of active ions in the negative electrode film layer 5212 includes two pathways. One is that active ions can diffuse through the surface of the negative electrode film layer 5212 towards the interior of the negative electrode film layer 5212. The other is that because of the storage of an electrolytic solution in the infiltrating cavity 5213, which serves as infiltration of the electrolytic solution into the negative electrode film layer 5212, the active ions in that part of the electrolytic solution can directly migrate from the infiltrating cavity 5213 to the interior of the negative electrode film layer 5212, and the migration path into the negative electrode active material is relatively short, which can significantly improve the problem of concentration polarization on both sides of the negative electrode film layer 5212, and further improve the safety performance and fast charging capability of the secondary battery. Optionally, 0.2 ≤ A₁/A ≤ 1. For example, A₁/A may be 0.1, 0.2, 0.5, 0.6, 0.8, 0.9, 1, or in the range formed by any two of the values as mentioned above.

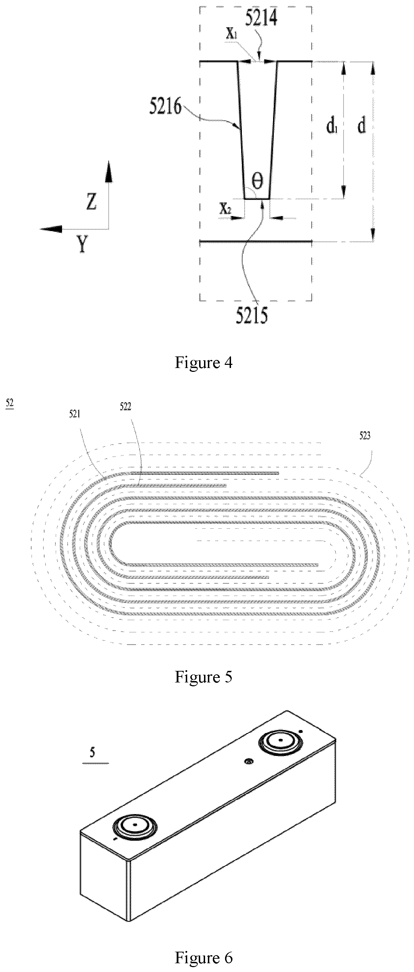

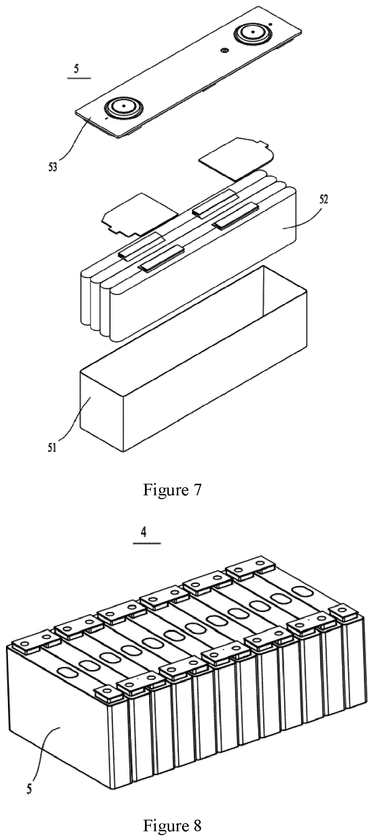

Referring to Figures 5 to 7, when the negative electrode plate 521 is made into a finished product, it has a plate-like structure with preset length, height, and width. When the negative electrode plate 521, positive electrode plate 522, and separator 523 form the electrode assembly 52, they can be wound along the length direction of the negative electrode plate 521. When placing electrode assembly 52 into the secondary battery 5 having a housing 51, the height direction of the secondary battery 5 may be parallel with the length direction of the negative electrode plate 521 or the width direction of the negative electrode plate 521. X direction shown in Figure 7 indicates that the height direction of the secondary battery 5 is parallel with the width direction of the negative electrode 521.

Due to gravity, the electrolytic solution in secondary battery 5 accumulates in the bottom, resulting in sufficient infiltration of the electrolytic solution into the electrode assembly 52 in the bottom, while poor infiltration into the electrode assembly 52 far from the bottom. The infiltration performance of the electrolytic solution into the electrode assembly 52 as a whole is not even. During the charging and discharging cycle of secondary battery 5, when the active ions such as lithium ions migrate in the electrode assembly 52 far from the bottom, they cannot intercalate into the negative electrode plate 521 due to a lack of the electrolytic solution; as a result, the lithium ions deposit on the surface of the negative electrode plate 521.

Furthermore, the extension direction (first direction) of the infiltrating cavity 5213 and the height direction of the secondary battery 5 can form an angle, denoted as δ in °, wherein 0° ≤ δ < 180°. Under the condition that the angle between the extension direction of the infiltrating cavity 5213 and the height direction of the secondary battery 5 falls within a certain range, the migration rate of active ions such as lithium ions in the liquid phase can be effectively improved, and further the fast charging performance of the secondary battery 5 ca be effectively improved. Optionally, 0° ≤ δ ≤ 30° or 150° ≤ δ < 180°; and optionally, the infiltrating cavities 5213 extends along the height direction of the secondary battery 5, that is, the first direction is parallel to the height direction of the secondary battery 5, and being parallel may refer to being absolutely parallel or approximately parallel. For example, δ may be within the range of 0°, 5°, 12°, 15°, 25°, 30°, 150°, 155°, 160°, 170°, 175°, 179°, or any ranges formed by combining any two of the values as mentioned above.

The extension direction of the infiltrating cavity 5213 is parallel with the height direction of the secondary battery 5. In this case, the length direction of the negative electrode 521 may be parallel with the height direction of the secondary battery, and alternatively, the width direction of the negative electrode 521 may be parallel with the height direction of the secondary battery 5. As shown in Figure 7, X direction indicates the direction that the height direction of the secondary battery 5 is parallel with the width direction of the negative electrode 521.

The electrolytic solution in the infiltrating cavity 5213 can be guided from the bottom to the top of the secondary battery 5. In the height direction of the secondary battery 5, the electrolytic solution infiltrates the electrode assembly 52 evenly, and the migration rate of active ions in the height direction is not significantly different. Accordingly, the uniform performance of the electrode assembly 52 as a whole during the charging and discharging process is ensured, and the fast charging capability and safety performance of the secondary battery 5 are further improved.

Of course, the extension direction of the infiltrating cavity 5213 can not only parallel with the height direction of the secondary battery 5, but also intersect with the height direction. In this case, the infiltrating cavity 5213 is still able to guide the electrolytic solution located in the bottom to the top.

The inventor has further found that, in addition to the influence of the extension length and direction of the infiltrating cavity 5213 on the fast charging capacity and safety performance of the secondary battery, other dimension parameters of the infiltrating cavity 5213, in case of satisfying one or more of the following conditions, will further improve the performance of the secondary battery 5.

In some embodiments, the dimension of the negative electrode film layer 5212 in the thickness direction of the negative electrode plate 521 is denoted as d, in µm; and the dimension of the infiltrating cavity 5213 in the thickness direction of the negative electrode plate 521 is denoted as di, in µm. The negative electrode plate 521 satisfies 0.01 ≤ d₁/d < 1, and optionally, 0.2 ≤ d₁/d ≤ 0.8. Figure 4 shows di and d. Figures 3 and 4 shows Z direction that represents the thickness direction.

The dimension of the negative electrode film layer 5212 in the thickness direction, denoted as d, is the thickness of the negative electrode film layer 5212; it has a meaning as commonly understood in the art and can be tested using equipment or methods well-known in the art. Specifically, it can be measured using a micrometer, for example, the model Mitutoyo293-100 with an accuracy of 0.1 µm. The thickness of the negative electrode film layer 5212 of the present application refers to the thickness of the negative electrode film in the negative electrode plate 521 used for assembling batteries after cold pressing and compaction.

The dimension of the infiltrating cavity 5213 in the thickness direction can be obtained using scanning electron microscopy (SEM).

Through research, it has been found that under the condition that the dimension of the infiltrating cavity 5213, in the thickness direction of the negative electrode plate 521, satisfies the above relationships, the dimension changes caused by process deviation can be reduced, and the electrolytic solution can fully infiltrate the interior of the negative electrode film layer 5212, so the active ions migrate faster in the negative electrode film layer 5212; as a result, the concentration polarization is further reduced and the fast charging ability and safety performance of secondary batteries are improved. As an example, di/d may be 0.01, 0.1, 0.2, 0.3, 0.5, 0.6, 0.7, 0.8, 0.9, 0.95, or 0.99, or falls in any ranges formed by any two of the values mentioned above.

By d₁/d =1, it is meant that the infiltrating cavity 5213 goes through the negative electrode film layer 5212 completely, so the electrolytic solution can contact the negative electrode current collector 5211 through the infiltrating cavity 5213. The active ions can obtain electrons directly on the surface of the negative electrode current collector 5211.

In some embodiments, the cross-section of the infiltrating cavity 5213 that is parallel with the second direction include the first edge 5214 and the second edge 5215, with the first edge 5214 and the second edge 5215 being opposite each other along the thickness direction. The first edge 5214 is set away from the negative electrode collector 5211, and the second edge 5215 is set close to the negative electrode collector 5211. The second direction, the first direction, and the thickness direction are perpendicular one another. Z direction as shown in Figures 3 and 4 represents the thickness direction, and Y direction represents the second direction.

The dimensions of the first edge 5214 and the second edge 5215 of the infiltrating cavity 5213 have a meaning as commonly understood in the art, and can be measured using equipment and methods well-known in the art. In particular, the measurement can be performed using scanning electron microscopy (SEM) to capture the cavity cross-section.

The dimension of the first edge 5214 of the infiltrating cavity 5213 is denoted as *x*₁ µm. When the dimension of the first edge 5214 is small, the active ions that migrate from the infiltrating cavity 5213 into the negative electrode film layer 5212 are in a small amount; as a result, the improvement in the migration of active ions is relatively small. When the dimension of the first edge 5214 is large, the overall specific capacity of the negative electrode film layer 5212 becomes small, resulting in a low energy density of the secondary battery. Under the condition that the dimension of the first edge 5214 of the infiltrating cavity 5213 satisfies 20 ≤ *x*₁ ≤ 100, and optionally satisfies 20 ≤ *x*₁ ≤ 80, the fast charging capacity and safety performance of the secondary battery can be balanced.

The dimension of the second edge 5215 of the infiltrating cavity 5213 is denoted as *x*₂ µm. When the dimension of the second edge 5215 is small, the active ions that migrate from the infiltrating cavity 5213 to the negative electrode film layer 5212 are in a small amount; as a result, the improvement in the migration of active ions is relatively small. When the dimension of the second edge 5215 is large, the overall specific capacity of the negative electrode film layer 5212 becomes small, resulting in a low energy density of the secondary battery. Under the condition that the dimension of the dimension of the first edge 5214 of the infiltrating cavity 5213 satisfies 20 ≤ *x*₂ ≤ 5000, and optionally satisfies 20 ≤ *x*₂ ≤ 80, the fast charging capacity, safety performance, and energy density of the secondary battery can be balanced.

Furthermore, 0 ≤ |*x*₁ - *x*₂ | ≤ 60.

The structure of the infiltrating cavity 5213 can be flexibly set according to the production requirements, and the intercalation speed of the active ions into the negative electrode active substance can be adjusted by setting the dimensions of the first edge 5214 and second edge 5215 of the infiltrating cavity 5213. As a result, the fast charging capacity of the secondary battery is improved.

When *x*₁ - *x*₂ = 0, the cross-section of the infiltrating cavity 5213 may have a regular quadrilateral structure (such as a rectangle, square, etc.). When *x*₁ - *x*₂ > 0 or *x*₁ - *x*₂ < 0, the cross-section of the infiltrating cavity 5213 may have a trapezoidal structure. Of course, the cross-section of the infiltrating cavity 5213 not only includes the above-mentioned quadrilateral structure, but also may be other regular or irregular polygons such as pentagons, hexagons, and heptagons. Irregular polygons may be polygons with unequal sides, as well as polygonal structures containing arcs.

In some embodiments, the cross-section of the infiltrating cavity 5213 may include two sides 5216 opposite to each other along the second direction, the two sides 5216 are connected via the second edge 5215. The angle formed by one of the two sides 5216 and the second edge 5215 is denoted as θ in degree (°), 0 < θ < 150.

The angle formed by the side edge 5216 of the infiltrating cavity 5213 and the second edge 5215 has a meaning as commonly understood in the art, and can be tested using equipment and methods well-known in the art. In particular, the angle value can be determined using the scanning electron microscopy SEM to capture the cavity cross-section for measurement.

The structure of the infiltrating cavity 5213 can be flexibly set according to the production requirements, and the intercalation speed of the active ions into the negative active substance can be adjusted by setting the angle between the side edge 5216 and the second edge 5215 of the infiltrating cavity 5213. As a result, the fast charging capacity of the secondary battery is improved.

In some embodiments, the porosity of the negative electrode film layer 5212 is denoted as P %, 10 ≤ P ≤ 40.

The porosity P % of negative electrode film layer 5212 has a meaning as commonly understood in the art and thus can be tested using equipment or methods well-known in the art. In particular, gas displacement method can be used, the porosity P = (V₁-V₂)/V₁ × 100%, in which V₁ represents the apparent volume, and V₂ represents the actual volume.

The porosity P% of the negative electrode film layer 5212 may affect the liquid phase conduction of active ions inside the pores of the negative electrode film layer 5212. The higher the porosity P%, the more the pore structures inside the negative electrode film layer 5212; as a result, the electrolytic solution infiltration performance of the negative electrode film 521 is better, and the liquid phase conduction rate of active ions inside the negative electrode film layer 5212 is faster; accordingly, during rapid charging of the secondary battery, the active ions can intercalate into the negative electrode active substance more easily. At the same time, the risk of lithium dendrites growing due to the reduction and deposition of active ions on the surface of the negative electrode film layer 5212 can be reduced. During the repeated charging and discharging process of the secondary battery, the irreversible capacity loss reduces, while the cycle life of the secondary battery increases. As the porosity P% further increases, however, the energy density of the secondary batteries will lose greatly. Under the condition that the porosity P% of the negative electrode film layer 5212 is within the above range, the fast charging capacity and energy density of the secondary battery can be improved. For example, the porosity of the negative electrode film layer 5212 may be 10%, 12%, 15%, 18%, 20%, 25%, 30%, 35%, 40%, or may fall in the range formed by any two of the values as mentioned above.

In some embodiments, a plurality of infiltrating cavities 5213 are arranged, and the infiltrating cavities 5213 are arranged at intervals.

By arranging multiple infiltrating cavities 5213, the liquid phase conduction rate of active ions in the negative electrode film layer 5212 can be further improved, so the active ions quickly intercalate into the negative electrode active material, thereby improving the fast charging capacity of the secondary battery.

In some embodiments, the negative electrode current collector 5211 may be a metal foil or a composite current collectors. For example, as a metal foil, copper foil can be used. The composite current collector may include a polymer material substrate and a metal layer formed on at least one surface of the polymer material substrate. The composite current collectors can be formed by forming metal materials (copper, copper alloys, nickel, nickel alloys, titanium, titanium alloys, silver, and silver alloys, etc.) onto polymer substrates such as polypropylene (PP), polyethylene terephthalate (PET), polybutylene terephthalate (PBT), polystyrene (PS), polyethylene (PE).

In some embodiments, the negative electrode film layer 5212 includes a negative electrode active substance. The negative electrode active substance can be a negative electrode active substance commonly known in the art for batteries. As an example, negative electrode active substances can include at least one of the following materials: artificial graphite, natural graphite, soft carbon, hard carbon, silicon based materials, tin based materials, or lithium titanate. Silicon based materials can be at least one selected from elemental silicon, silicon oxide compounds, silicon carbon composites, silicon nitrogen composites, and silicon alloys. Tin based materials can be at least one selected from elemental tin, tin oxide compounds, and tin alloys. However, the present application is not limited to those materials, and other traditional materials that can be used as negative electrode active substances for batteries can also be used. These negative electrode active substances can be used alone or in combination of two or more.

In some embodiments, the negative electrode film layer 5212 may optionally include a negative electrode binder. The negative electrode binder can be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer 5212 may optionally include a conductive agent. The conductive agent may be at least one selected from superconducting carbon, acetylene black, carbon black, Koqin black, carbon dots, carbon nanotubes, graphene, and carbon nanofibers.

In some embodiments, the negative electrode film layer 5212 may optionally include other additives, such as thickeners such as carboxymethyl cellulose sodium (CMC-Na).

The negative electrode plate 521 may be prepared by various methods. Hereinbelow, the preparation of the negative electrode plate 521 will be explained.

### Method for Preparing Negative Electrode Plates

In the second aspect, the present application provides a method for preparing a negative electrode plate.

The method includes:
S210, providing a negative electrode current collector;
S220, placing a shielding member on at least one surface of the negative electrode current collector, wherein the shielding member includes a first through-hole(s) that penetrate(s) through the shielding member;
S230, applying the negative electrode slurry on the shielding member to allow the negative electrode slurry to flow through the first through-hole(s) onto the surface of the negative electrode current collector; and
S240, solidifying the negative electrode slurry to allow the negative electrode slurry to form a negative electrode film layer on the surface of the negative electrode current collector, wherein the negative electrode film layer has infiltrating cavity arranged in a staggered manner with the first through-hole(s), and the negative electrode film layer and the negative electrode current collector form the negative electrode plate,
wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

Before the negative electrode slurry of the present application is solidified, the hole forming is carried out. The negative electrode slurry, when being applied on the shielding member, spontaneously flows towards the first through-hole due to the fluidity thereof. The solid part of the shielding member will play a role of shielding, providing favorable conditions for the subsequent preparation of the infiltrating cavity. The shielding member is heated to make the slurry around the shielding member solidify, so as to reduce the risk that the infiltrating cavity is buried due to the flow of negative electrode slurry, ensuring the formation of the infiltrating cavity.

In the third aspect, the present application provides another method for preparing a negative electrode plate.

The method includes:
S310, providing a negative electrode current collector;
S320, applying a negative electrode slurry on at least one surface of the negative electrode current collector;
S330, placing a pressing member on the negative electrode slurry to apply a force to the negative electrode slurry, so that the negative electrode slurry has at least one concave portion; and
S340, solidifying the negative electrode slurry to allow the negative electrode slurry to form a negative electrode film layer on the surface of the negative electrode current collector, wherein the negative electrode film layer has at least one infiltratiing cavity corresponding to the concave portion, and the negative electrode film layer and the negative electrode current collector form the negative electrode plate,
wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

The hole forming is carried out before the solidification of the negative electrode slurry according to the present application. Because the negative electrode slurry has a certain fluidity, when setting the concave portion(s) on the negative electrode slurry by a pressing member, the force as required is relatively small, and substantially the negative electrode slurry will not lose.

In the fourth aspect, the present application provides another method for preparing negative electrode plates.

The method comprises :
S410, providing a negative electrode current collector;
S420, applying a negative electrode slurry on at least one surface of the negative electrode current collector;
S430, curing the negative electrode slurry to allow the negative electrode slurry to form a negative electrode film layer on the surface of the negative electrode current collector,
S440, arranging infiltrating cavity on the negative electrode film layer, and the negative electrode film layer and the negative electrode current collector form the negative electrode plate,
wherein the infiltrating cavity extends in a first direction, the negative electrode film layer has a dimension in the first direction denoted as A in µm, the infiltrating cavity has a dimension in the first direction denoted as A₁ in µm, and the negative electrode plate satisfies 0.1 ≤ A₁/A ≤ 1, and optionally, 0.2 ≤ A₁/A ≤ 1.

In the present application, after the solidification of the negative electrode slurry, the holes can be made on the solidified negative electrode plate using an equipment such as a roller knife.

### Secondary Battery

In the fifth aspect, the present application provides a secondary battery 5.

Typically, the secondary battery includes a positive electrode plate 522, a negative electrode plate 521, an electrolyte, and a separator 523. During the charging and discharging process of secondary battery 5, the active ions repeatedly intercalate into and deintercalate out of between the positive electrode plate 522 and the negative electrode plate 521. The electrolyte plays a role of conducting ions between the positive electrode plate 522 and the negative electrode plate 521. The separator 523 is set between the positive electrode plate 522 and the negative electrode plate 521, mainly to prevent short circuits between the positive and negative electrodes, and to allow ions to pass through. The negative electrode plate 521 of the present application can be prepared using either the negative electrode plate 521 of the first aspect of the present application or the negative electrode plate 521 obtained by any of the methods described in the second to fourth aspects of the present application.

### [Positive electrode plate]

In some embodiments, the positive electrode plate 522 includes a positive current collector and a positive electrode film layer arranged on at least one surface of the positive current collector. For example, the positive electrode current collector has two surfaces opposite in the thickness direction thereof, and the positive electrode film layer is set on either or both of the two opposite surfaces of the positive electrode current collector.

The positive electrode film layer includes a positive electrode active substance, which can be a positive electrode active substance commonly known in the art for secondary batteries. As an example, the positive electrode active substances may include at least one of the following materials: layered positive electrode active substances (such as ternary layered materials, lithium nickel/sodium layered materials, lithium cobalt/sodium layered materials, lithium manganese/sodium layered materials, lithium rich/sodium layered materials, and rock salt phase layered materials), olivine-type phosphate active substances, or spinel-structure positive electrode active substances (such as spinel lithium manganese, spinel nickel manganese, spinel lithium manganese, and nickel manganese).

For example, the layered positive electrode active substance has a general formula of LiₓAyNiₐCo_{b}Mn_{c}M_{(1-a-b-c)}Y_{z}, in which 0 ≤ x ≤ 2.1, 0 ≤ y ≤ 2.1, and 0.9 ≤ x+y ≤ 2.1; 0 ≤ a ≤ 1, 0 ≤ b ≤ 1, 0 ≤ c ≤ 1, and 0.1 ≤ a+b+c ≤ 1; 1.8 ≤ z ≤ 3.5; A is one or more selected from Na, K, and Mg; M is one or more selected from B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is one or more selected from O and F. Optionally, y = 0. Specifically, the layered positive electrode active substances may include one or more of lithium cobalt oxide (LCO), lithium nickel oxide (LNO), lithium manganese oxide (LMO), LiNi_{1/3}Co_{1/3}Mn_{1/3}O₂ (NCM333), LiNi_{0.8}Co_{0.1}Mn_{0.1}O₂ (NCM811), and LiNi_{0.5}Co_{0.2}Mn_{0.3}O₂ (NCM523).

For example, the olivine-type phosphate active substance has a general formula of LiₓA_{y}MeₐM_{b}P_{1-c}X_{c}Y_{z}, in which 0 ≤ x ≤ 1.3, 0 ≤ y ≤ 1.3, and 0.9 ≤ x+y ≤ 1.3; 0.9 ≤ a ≤ 1.5, 0 ≤ b ≤ 0.5, and 0.9 ≤ a+b ≤ 1.5; 0 ≤ c ≤ 0.5; 3 ≤ z ≤ 5; A is one or more selected from Na, K, and Mg; Me is selected from one or more of Mn, Fe, Co, and Ni; M is one or more selected from B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is one or more selected from S, Si, Cl, B, C, and N; and Y is one or more selected from O and F. Specifically, olivine type phosphate active substances include one or more of LiFePO₄, LiMnPO₄, LiNiPO₄, and LiCoPO₄.

For example, the spinel-structure positive electrode active substance has a general formula of LiₓA_{y}MnₐM₂₋ₐY_{z}, in which 0 ≤ x ≤ 2, 0 ≤ y ≤ 1, and 0.9 ≤ x+y ≤ 2; 0.5 ≤ a ≤ 2; 3 ≤ z ≤ 5; A is one or more selected from Na, K, and Mg; M is one or more selected from Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is one or more selected from O and F. Specifically, the spinel-structure positive electrode active substance include one or more of LiMn₂O₄, LiNi_{0.5}Mn_{1.5}O₄, LiCr_{0.3}Mn_{1.7}O₄, Li_{1.1}Al_{0.1}Mn_{1 9}O₄, Li₂Mn₂O₄, or Li_{1.5}Mn₂O₄.

In some embodiments, the positive electrode film layer may optionally include a positive electrode conductive agent. There are no special restrictions on the types of positive electrode conductive agents in the present application. As an example, the positive electrode conductive agent includes one or more of superconducting carbon, conductive graphite, acetylene black, carbon black, Koqin black, carbon dots, carbon nanotubes, graphene, carbon nanofibers, or the combination thereof. In some embodiments, based on the total mass of the positive electrode film layer, the mass percentage of the positive electrode conductive agent is less than 5%.

In some embodiments, the positive electrode film layer may optionally include a positive electrode binder. There are no special restrictions on the types of positive electrode binders in the present application. As an example, the positive electrode binder may include one or more combinations selected from polyvinylidene fluoride (PVDF), polytetrafluoroethylene (PTFE), vinylidene fluoride tetrafluoroethylene propylene terpolymer, vinylidene fluoride hexafluoropropylene tetrafluoroethylene terpolymer, tetrafluoroethylene hexafluoropropylene copolymer, fluoroacrylate resin, and the combination thereof. In some embodiments, based on the total mass of the positive electrode film layer, the mass percentage of the positive electrode binder is less than 5%.

In some embodiments, the positive electrode current collector may be a metal foil or composite current collector. As an example of metal foil, aluminum foil or aluminum alloy foil may be used. The composite current collector may include a polymer material base layer and a metal material layer formed on at least one of the surfaces of the polymer material base layer. As an example, the metal material may include one or more selected from aluminum, aluminum alloy, nickel, nickel alloy, titanium, titanium alloy, silver, silver alloy, and the combination thereof. The polymer material base layer may include one or more selected from polypropylene (PP), polyethylene terephthalate (PET), polybutylene terephthalate (PBT), polystyrene (PS), polyethylene (PE), and the combination thereof.

The positive electrode film layer is usually formed by applying the positive electrode slurry on the positive electrode current collector, drying, and cold pressing. The positive electrode slurry is usually formed by dispersing the positive electrode active substance, optional conductive agent, optional binder, and any other components in a solvent and stirring evenly. The solvent may be N-methylpyrrolidone (NMP), but is not limited thereto.

### [Electrolyte]

The electrolyte conducting ions between the positive electrode plate 522 and the negative electrode plate 521. The types of electrolytes are not specifically restricted in the present application, and can be elected according to actual needs. For example, the electrolyte can be liquid, gelled or all solid.

In some embodiments, the electrolyte is an electrolytic solution. The electrolytic solution includes an electrolyte salt and a solvent.

In some embodiments, the electrolyte is an electrolytic solution. The electrolytic solution includes an electrolyte salt and a solvent.

As an example, a lithium salts may include one or more selected from lithium hexafluorophosphate (LiPF₆), lithium tetrafluoroborate (LiBF₄), lithium perchlorate (LiClO₄), lithium hexafluoroarsenate (LiAsF₆), lithium difluorosulfonyl imine (LiFSI), lithium difluorosulfonyl imine (LiTFSI), lithium trifluoromethanesulfonate (LiTFS), lithium difluorooxalate borate (LiDFOB), lithium dioxalate borate (LiBOB), lithium difluorophosphate (LiPO₂F₂) One or more combinations of lithium difluorooxalate phosphate (LiDFOP), lithium tetrafluorooxalate phosphate (LiTFOP), and the combination thereof.

As an example, an organic solvents may include one or more selected from ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP) One or more combinations of ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE) , and the combination thereof.

In some embodiments, the electrolytic solution may optionally include an additive. For example, the additive may include a negative electrode film-forming additive, a positive electrode film-forming additive, and may include an additive that can improve certain battery performance, such as the additive that can improve battery overcharging performance, and the additive that can improve battery high or low temperature performance.

### [Separator]

In some embodiments, the secondary battery further includes a separator 523. There are no special restrictions on the types of separator 523 in the present application, and any well-known porous-structure separator with good chemical and mechanical stability can be selected.

In some embodiments, the material of the separator 523 may be at least one selected from glass fiber, non-woven fabric, polyethylene, polypropylene, and polyvinylidene fluoride. The separator can be a single layer thin film or a multi-layer composite thin film, without special limitations. When the separator is a multi-layer composite film, the materials of each layer can be the same or different, without special restrictions.

In some embodiments, the positive electrode plate 522, the negative electrode plate 521, and the separator 523 can be made into an electrode assembly 52 through a winding process or a stacking process.

The shape of the secondary batteries is not specifically restricted in the present application, and can be cylindrical, square, or any other shape. Figure 6 is an example of a square structured secondary battery 5.

In some embodiments, as shown in Figures 6 and 7, the outer packaging may include a housing 51 and a cover plate 53. The housing 51 may include a bottom plate and a side plate connected to the bottom plate, and the bottom plate and side plate enclose to form an accommodation chamber. The housing 51 has an opening connected to the accommodation chamber, and the cover plate 53 covers the opening to close the accommodation chamber. The positive electrode plate, negative electrode plate, and separator may form an electrode assembly 52 through winding or stacking processes. The electrode assembly 52 is encapsulated in the accommodation chamber. The electrolytic solution immerse the electrode assembly 52. The number of electrode components 52 contained in secondary battery 5 may be one or more, and may be adjusted according to needs.

The method for preparing the secondary battery 5 in the present application is well-known. In some embodiments, the positive electrode plate 522, separator 523, negative electrode plate 521, and electrolytic solution may be assembled to form a secondary battery 5. As an example, the electrode plate 522, separator 523, and negative electrode plate 521 can be wound or stacked to form an electrode assembly 52. The electrode assembly 52 is placed in an outer packaging, dried, and injected with electrolytic solution. After vacuum encapsulation, standing, formation, shaping, and other processes, the secondary battery 5 may be obtained.

In some embodiments of the present application, the secondary battery 5 of the present application may be assembled to form a battery module, and the number of secondary batteries 5 contained in the battery module can be multiple, and the specific number can be adjusted according to the application and capacity of the battery module.

Figure 8 is a schematic diagram of battery module 4 as an example. As shown in Figure 8, in battery module 4, multiple secondary batteries 5 can be arranged in sequence along the length direction of battery module 4. Of course, they may be arranged in any other way. Further, the multiple secondary batteries 5 may be secured with fasteners.

Optionally, the battery module 4 may further include a housing with accommodating space, in which multiple secondary batteries 5 are accommodated.

In some embodiments, the above-mentioned battery modules may further be assembled into battery packs, and the number of battery modules contained in the battery pack can be adjusted based on the application and capacity of the battery pack.

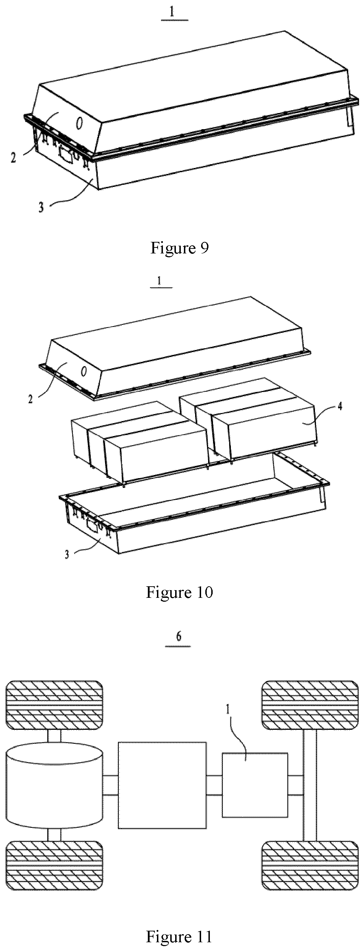

Figures 9 and 10 are schematic diagrams of battery pack 1 as an example. As shown in Figures 9 and 10, the battery pack 1 may include a battery box and multiple battery modules 4 arranged in the battery box. The battery box includes an upper box 2 and a lower box 3. The upper box 2 covers the lower box 3 and forms a closed space for accommodating the battery module 4. Multiple battery modules 4 may be arranged in any way in the battery box.

### Electrical device

In the sixth aspect, the present application provides an electrical device, including at least one of the secondary battery, battery module, and battery pack of the present application. The secondary battery, battery module, and battery pack may be used as the electric source of the electrical device or the energy storage unit of the electrical device. The electric device may be, but are not limited to mobile devices (such as mobile phones, laptops, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc.

The electric device may be selected as the secondary batteries, battery modules, or battery packs based on the usage thereof.

Figure 11 is a schematic diagram of an electrical device as an example. The electrical device 6 is a pure electric vehicle, hybrid electric vehicle, or plug-in hybrid electric vehicle, etc. To meet the requirements for high power and energy density of the electrical device, the battery pack 1 or battery module may be used.

As another example, the electrical device may be mobile phones, tablets, laptops, etc. The electrical device usually requires to be light and thin, and can adopt the secondary battery as the power source.

### Examples

Hereinbelow, the implementations of the present application will be described. The embodiments as described below are exemplary and are only intended to explain the present application, but should not be understood as limitations to the present application. Where the embodiment in which the specific technology or conditions are not specified, the technology or conditions may be employed according to those described in the literature in the art or the product manual. The reagents or instruments used without specifying the manufacturer are conventional products that are commercially available.

### Example 1-1

### 1. Preparation of positive electrode plate

### An aluminum foil having a thickness of 12 µm is used the positive current collector.

The positive electrode active substance, conductive carbon black, and binder polyvinylidene fluoride (PVDF), in a weight ratio of 97.5:1.4:1.1, were mixed in an appropriate amount of NMP as the solvent under stirring, to form a uniform positive electrode slurry; the positive electrode slurry were evenly applied on the surface of the aluminum foil as the positive electrode current collector, after drying and cold pressing, a positive electrode plate were obtained.

### 2. Preparation of negative electrode plate

### A copper foil having a thickness of 8 µm were used the negative electrode current collector.

The negative electrode active material artificial graphite, conductive carbon black, styrene butadiene rubber (SBR) as the binder, and sodium hydroxymethylcellulose (CMC) as the thickener, in a weight ratio of 96.8:0.7:1.3:1.2, were mixed in an appropriate amount of de-ionized water as the solvent under stirring, to form a uniform negative electrode slurry.

The shielding member, such as a coating gasket, was placed on the negative electrode current collector. The negative electrode slurry flowed to the surface of the negative electrode current collector through the first through-hole of the coating gasket. By heating the coating the gasket, the negative electrode slurry solidified to form a negative electrode film layer, which protects the infiltrating cavity. After drying and cold pressing, the negative electrode film layer and the negative electrode current collector formed a negative electrode plate.

### 3. Separator

### A porous polyethylene (PE) film was used as the separator.

### 4. Preparation of electrolytic solution

In an environment with a water content of less than 10ppm, ethylene carbonate EC and diethyl carbonate DMC, as the non-aqueous organic solvents, were mixed in a volume ratio of 1:1 to obtain an electrolytic solvent. Subsequently, the lithium salt was mixed with the mixed solvent to prepare an electrolytic solution with a lithium salt concentration of 1 mol/L.

### 5. Preparation of secondary batteries

The positive electrode plate, separator, and negative electrode plate were stacked in sequence, so that the separator separated the positive electrode plate from the negative electrode plate, and then they were wound to obtain the electrode assembly; the electrode assembly was placed in an outer packaging, after drying, the electrolytic solution was injected, after vacuum encapsulation, standing, formation, shaping, and other processes, a lithium-ion battery was obtained. The extension direction of the infiltrating cavity in the negative electrode plate is parallel with the height direction of the lithium-ion battery.

### Examples 1-2 to 1-4

In Examples 1-2 to 1-4, the lithium-ion batteries were prepared by the method similar to Examples 1-1, except that the dimension of the infiltrating cavity in the negative electrode thickness direction, di in µm, were adjusted.

### Examples 2-1 to 2-4

In Examples 2-1 to 2-4, the lithium-ion batteries were prepared by the method similar to Examples 1-3, except that the dimension in the first direction of the infiltrating cavity, A₁ in µm, was adjusted.

### Examples 3-1 to 3-3

In Examples 3-1 to 3-3, the lithium-ion batteries were prepared by the method similar to Examples 1-3, except that the dimension of the second edge of the infiltrating cavity, *x*₂ in µm, was adjusted.

### Examples 4-1 and 4-2

In Examples 4-1 and 4-2, the lithium-ion batteries were prepared by the method similar to Examples 1-3, except that the angle formed between the side edges of the infiltrating cavity and the second edge, θ in degree (°), was adjusted.

### Examples 5-1 to 5-3

In Examples 5-1 to 5-3, the lithium-ion batteries were prepared by the method similar to Examples 1-3, except that at least the angle formed between the extension direction of the infiltrating cavity and the height direction of the lithium-ion battery, δ in °, was adjusted.

### Comparative Example 1

In Comparative Example 1, the lithium-ion batteries were prepared by the method similar to Example 1, except that the preparation process of the negative electrode plate was adjusted. Specifically, a copper foil having a thickness of 6 µm was used as the negative electrode current collector. The artificial graphite as the negative electrode active material, carbon black as the conductive agent, styrene butadiene rubber (SBR) as the binder, and sodium hydroxymethylcellulose (CMC) as the thickener were mixed in a weight ratio of 96.8:0.7:1.3: 1.2 in an appropriate amount of deionized water as the solvent, to form a uniform negative electrode slurry. The negative electrode slurry was applied to the negative electrode current collector. After drying and cold pressing, the negative electrode slurry formed a negative electrode film layer, that is, the negative electrode plate was formed. In Comparative Example 1, the pore size was 1 µm and the porosity was 20%. The porosity in Comparative Example 1 resulted from the pore structure formed during the drying and cold pressing process of the negative electrode film layer.

The relevant parameters of the Examples and Comparative Example are shown in Table 1.

**Table 1**

| Nos. | A₁/A | P% | d₁/d | *x*₁ µm | *x*₂ µm | *x*₁ *- x*₂ µm | θ° | The angle formed between the extension direction and height direction of the infiltrating cavity δ in ° | 20-80% SOC charging time T min |
|---|---|---|---|---|---|---|---|---|---|
| Example 1-1 | 1 | 30 | 0.2 | 60 | 60 | 0 | 90 | 0 | 18 |
| Example 1-2 | 1 | 32 | 0.4 | 60 | 60 | 0 | 90 | 0 | 14 |
| Example 1-3 | 1 | 35 | 0.8 | 60 | 60 | 0 | 90 | 0 | 9 |
| Example 1-4 | 1 | 27 | 0.05 | 60 | 60 | 0 | 90 | 0 | 20 |
| Example 2-1 | 0.2 | 25 | 0.8 | 60 | 60 | 0 | 90 | 0 | 23 |
| Example 2-2 | 0.6 | 30 | 0.8 | 60 | 60 | 0 | 90 | 0 | 20 |
| Example 2-3 | 0.8 | 33 | 0.8 | 60 | 60 | 0 | 90 | 0 | 19 |
| Example 2-4 | 0.1 | 22 | 0.8 | 60 | 60 | 0 | 90 | 0 | 24 |
| Example 3-1 | 1 | 37 | 0.8 | 60 | 62 | 2 | 90 | 0 | 15 |
| Example 3-2 | 1 | 40 | 0.8 | 60 | 65 | 5 | 90 | 0 | 12 |
| Example 3-3 | 1 | 35 | 0.8 | 80 | 20 | 60 | 90 | 0 | 17 |
| Example 4-1 | 0.8 | 36 | 0.8 | 60 | 60 | 0 | 30 | 0 | 13 |
| Example 4-2 | 0.8 | 35 | 0.8 | 60 | 60 | 0 | 150 | 0 | 15 |
| Example 5-1 | 1 | 32 | 0.8 | 60 | 60 | 0 | 90 | 90 | 20 |
| Example 5-2 | 1 | 35 | 0.8 | 60 | 60 | 0 | 90 | 30 | 13 |
| Example 5-3 | 1 | 31 | 0.8 | 60 | 60 | 0 | 90 | 150 | 14 |
| Comparative Example 1 | / | 20 | 0 | / | / | / | / | / | 25 |

As known from Table 1, compared to Comparative Example 1, the embodiments of the present application achieved the faster transfer speed of lithium ions in the liquid phase by making holes in the negative electrode film layer, which is conducive to improving the dynamic performance, and achieved the faster charging speed, which is conducive to improving the fast charging ability.

In Examples 1-1 to 4-2 of the present application, infiltrating cavities were provided on the negative electrode film layer, and the infiltrating cavities were set along the height direction of the secondary battery to absorb the electrolytic solution. Accordingly, the infiltration effect of the electrolytic solution for the negative electrode film layer ware improved and thus conducive to the rapid migration of lithium ions, so that the fast charging ability was improved, and also the local precipitation of lithium ions was reduced, resulting in improved safety performance.

In Examples 5-1 to 5-3, the extension direction of the infiltrating cavity was adjusted. When the angle between the extension direction of the infiltrating cavity and the height direction of lithium ions was greater than 0°, the transfer speed of lithium ions in the liquid phase was improved to a certain extent, facilitating the improvement in fast charging ability of lithium ions.

### Tests

### 1. Test of rapid charging performance of the secondary battery

At 25°C, the secondary battery as prepared above were charged at a constant current of 0.33C to a charging cut-off voltage of 4.4V, then charged at the constant voltage to a current of 0.05C, after standing for 5 minutes, it was discharged at a constant current of 0.33C to a discharging cut-off voltage of 2.8V. The actual capacity was recorded as C0.

Then the secondary battery was charged at a constant current of 0.5C0, 1C0, 1.5C0, 2C0, 2.5C0, 3C0, 3.5C0, 4C0, and 4.5C0 sequentially to the full battery charging cut-off voltage of 4.4V or negative electrode cut-off potential of 0V (whichever reached first), and after each charging, the secondary battery was discharged at 1C0 to the full battery discharging cut-off voltage of 2.8V;the corresponding negative electrode potentials, when charging to 10%, 20%, 30% ... 80% SOC (State of Charge) at different charging rates, were rescored. The charging rate versus negative electrode potential curves were plotted for different SOC states, and through the linear fitting, the charging rates correspond to 0V of the negative electrode potential at different SOC states were obtained. The charging rates are the charging windows for those SOC states, denoted as C10%SOC, C20%SOC, C30%SOC, C40%SOC, C50%SOC, C60%SOC, C70%SOC, and C80%SOC. According to the formula (60/C20%SOC + 60/C30%SOC + 60/C40%SOC + 60/C50%SOC + 60/C60%SOC + 60/C70%SOC + 60/C80%SOC ) × 10%, the charging time T of the secondary battery from 10% SOC to 80% SOC was calculated. The shorter the charging time T, the better the fast charging performance of the secondary battery.

### 2. Evaluation of safety performance of the secondary battery by thermal runaway temperature, test of thermal runaway temperature

The circumstance temperature was conditioned to 25 °C, the secondary battery as prepared above was charged at 1C to 4.25V, and then charged at the constant voltage to 0.05C. The secondary battery was placed in a heating furnace which was heated at 10 °C/min, holding for 10 minutes until the secondary battery was suffered from thermal runaway, the test was stopped. The temperature, as monitored by the heating furnace when the secondary battery was suffered from thermal runaway, was recorded as the thermal runaway temperature.

Although the present application has been described with reference to preferred embodiments, various improvements can be made and components can be replaced with equivalents without departing from the scope of the present application. Especially, as long as there is no structural conflict, the various technical features mentioned in each embodiment can be combined in any way. The present application is not limited to the specific embodiments disclosed in the text, but includes all technical solutions falling within the scope of the claims.

## Claims

1. A negative electrode plate , comprising
a negative electrode current collector, and
a negative electrode film layer arranged on at least one surface of the negative electrode current collector,
wherein the negative electrode film layer comprises at least one of infiltrating cavity which opens in a direction away from the negative electrode current collector and extend in a first direction; and
wherein the negative electrode film layer has a dimension in the first direction denoted as A in µm, the infiltrating cavity has a dimension in the first direction denoted as A₁ in µm, and
the negative electrode plate satisfies 0.1 ≤ A₁/A ≤ 1, and optionally, 0.2 ≤ A₁/A ≤ 1.

2. The negative electrode plate according to claim 1, wherein the first direction and the length direction of the negative electrode plate form an angle denoted as β°, wherein 0 ≤ β < 180;
optionally, the first direction is parallel with the length direction of the negative electrode plate, or
the first direction is parallel with the width direction of the negative electrode plate.

3. The negative electrode plate according to claim 1 or 2, wherein
the negative electrode film layer has a dimension in the thickness direction of the negative electrode plate denoted as d in µm,
the infiltrating cavity has a dimension in the thickness direction of the negative electrode plate denoted as di in µm,
the negative electrode plate satisfies 0.01 ≤ d₁/d < 1, and optionally, 0.2 ≤ d₁/d ≤ 0.8.

4. The negative electrode plate according to any one of claims 1 to 3, wherein
the cross-section parallel with the second direction of the infiltrating cavity includes first and second edges, wherein the first and the second edges are opposite each other along the thickness direction of the negative electrode plate, the first edges are arranged away from the negative electrode current collector and the second edges are arranged close to the negative electrode current collector, and the second direction, the first direction, and the thickness direction are perpendicular each other;
the first edges have a dimension denoted as *x*₁ in µm, wherein 20 ≤ *x*₁ ≤ 5000, and optionally 20 ≤ *x*₁ ≤ 80; and/or
the second edges have a dimension denoted as *x*₂ in µm, wherein 20 ≤ *x*₂ ≤ 5000, and optionally 20 ≤ *x*₂ ≤ 80.

5. The negative electrode plate according to claim 4, wherein 0 ≤ |*x*₁ - x₂ | ≤ 60.

6. The negative electrode plate according to claim 4 or 5, wherein the cross-section parallel with the thickness direction of the infiltrating cavity have a shape of a regular polygon or an irregular polygon; and
optionally, the cross-section parallel with the thickness direction of the infiltrating cavity have the shape of rectangular, square, trapezoidal, or a polygon containing an arc.

7. The negative electrode plate according to any one of claims 4 to 6, wherein
the cross-section includes two side edges opposite each other along the second direction, wherein the two side edges are connected via the second edges; and
one of the two side edges and the second edges form an angle denoted as θ in °, wherein 0 < θ < 150.

8. The negative electrode plate according to any one of claims 1 to 7, wherein
the negative electrode film layer has a porosity denoted as P in %, wherein 10 ≤ P ≤ 40.

9. The negative electrode plate according to any one of claims 1 to 8, wherein
the negative electrode film layer comprises a plurality of the infiltrating cavities arranged at intervals.

10. A method for preparing a negative electrode plate, comprising
providing a negative electrode current collector;
arranging a shielding member on at least one surface of the negative electrode current collector, wherein the shielding member includes at least one first through-hole that penetrate(s) through the shielding member;
applying the negative electrode slurry on the shielding member to allow the negative electrode slurry to flow through the through-hole on the surface of the negative electrode current collector; and
curing the negative electrode slurry to allow the negative electrode slurry to form a negative electrode film layer on the surface of the negative electrode current collector, wherein the negative electrode film layer has infiltrating cavity arranged in a staggered manner with the first through-hole, and the negative electrode film layer and the negative electrode current collector form the negative electrode plate;
wherein
the infiltrating cavity extends in a first direction,
the negative electrode film layer has a dimension in the first direction denoted as A µM,
the infiltrating cavity has a dimension in the first direction denoted as A₁ in µm, and
the negative electrode plate satisfies 0.1 ≤ A₁/A ≤ 1, and optionally, 0.2 ≤ A₁/A ≤ 1.

11. A method for preparing a negative electrode plate, comprising
providing a negative electrode current collector;
applying a negative electrode slurry on at least one surface of the negative electrode current collector;
placing a pressing member on the negative electrode slurry to apply a force to the negative electrode slurry, so that the negative electrode slurry has at least one concave portion; and
solidifying the negative electrode slurry to allow the negative electrode slurry to form a negative electrode film layer on the surface of the negative electrode current collector, wherein the negative electrode film layer has at least one infiltrating cavity corresponding to the at least one concave portion, and the negative electrode film layer and the negative electrode current collector form the negative electrode plate,
wherein
the infiltrating cavity extends in a first direction,
the negative electrode film layer has a dimension in the first direction denoted as A in µM,
the infiltrating cavity has a dimension in the first direction denoted as A₁ in µm, and
the negative electrode plate satisfies 0.1 ≤ A₁/A ≤ 1, and optionally, 0.2 ≤ A₁/A ≤ 1.

12. A method for preparing a negative electrode plate, comprising
providing a negative electrode current collector;
applying a negative electrode slurry on at least one surface of the negative electrode current collector;
curing the negative electrode slurry to allow the negative electrode slurry to form a negative electrode film layer on the surface of the negative electrode current collector; and
arranging infiltrating cavity on the negative electrode film layer, and the negative electrode film layer and the negative electrode current collector form the negative electrode plate;
wherein
the infiltrating cavity extends in a first direction,
the negative electrode film layer has a dimension in the first direction denoted as A in µM,
the infiltrating cavity has a dimension in the first direction denoted as A₁ in µm, and
the negative electrode plate satisfies 0.1 ≤ A₁/A ≤ 1, and optionally, 0.2 ≤ A₁/A ≤ 1.

13. A secondary battery, comprising the negative electrode plate according to any one of claims 1 to 9 or the negative electrode plate prepared from the method according to any one of claims 10 to 12.

14. The secondary battery according to claim 13, wherein
the first direction and the height direction of the secondary battery forms angle δ°, wherein 0° < δ° < 180°, and optionally, 0° < δ° < 30° or 150° < δ° < 180°,
and further optionally, the infiltrating cavity extends along the height direction of the secondary battery.

15. An electrical device, comprising a secondary battery according to claim 14.
